(19) Europäisches Patentamt

European Patent Office

Office européen des brevets

(11) **EP 1 222 478 B1**

(12) **EUROPEAN PATENT SPECIFICATION**

(45) Date of publication and mention
of the grant of the patent:
**23.04.2003  Bulletin 2003/17**

(21) Application number: **00960757.3**

(22) Date of filing: **27.09.2000**

(51) Int Cl.⁷: **G01S 5/00**

(86) International application number:
**PCT/FI00/00829**

(87) International publication number:
**WO 01/023904 (05.04.2001 Gazette 2001/14)**

(54) **A METHOD AND A SYSTEM FOR POSITIONING A TRANSMITTER**

VERFAHREN UND POSITIONIERUNGSSYSTEM EINES SENDERS

PROCEDE ET SYSTEME DE POSITIONNEMENT D'UN EMETTEUR

(84) Designated Contracting States:
**DE FR GB IT**

(30) Priority: **27.09.1999  FI  992061**

(43) Date of publication of application:
**17.07.2002  Bulletin 2002/29**

(73) Proprietor: **Nokia Corporation**
**02150 Espoo (FI)**

(72) Inventor: **FORSTADIUS, Antti**
**FIN-33180 Tampere (FI)**

(74) Representative:
**Pitkänen, Hannu Alpo Antero et al**
**Patent Agency Pitkänen Oy,**
**P.O. Box 1188**
**70211 Kuopio (FI)**

(56) References cited:
**WO-A-96/42020          WO-A-97/11383**

**Description**

The object of the invention is a method and a system for positioning a transmitter, wherein the receiving delay of the timing signals transmitted by one or more transmitters, the locations of which are known, is measured with receivers, the locations of which are known, with respect to the timing signal transmitted by the transmitter to be positioned, and by making use of these measurements numerically the place of the transmitter, the location of which is unknown, is determined.

The location information of the transmitter can be used for many different purposes. One range of use concerns Bluetooth™ radio sets. These are advantageous short-range radio sets typically integrated in other products, with the help of which different devices can communicate with each other. Preferably the available location information of Bluetooth™ transmitters would enable various applications when intelligent devices, conscious of their environment and interacting with it, would be aware of their location with respect to other devices and their operating environment. Location information could also be utilised when making decisions on establishing data transmission connections with other devices, as well as in determining distances between devices. Another range of use is the positioning of mobile stations, which enables, for example, the positioning of a person making an emergency call, as well as provides the user of a mobile station with information on his own location. The location information of a transmitter can also be utilised in different control and access control applications.

Many different methods are known for positioning a transmitter, which as a rule are based on the measurement of the propagation delay of a signal, the time difference or the bearing or their variations. The same principles can generally be applied to the positioning of a transmitter as to the positioning of a receiver, with the one difference that, typically, for positioning a transmitter several receivers are used and for positioning a receiver several transmitters are used, the locations of which are known.

In methods based on a propagation delay, the propagation time of a signal is measured from a transmitter to a receiver with several transmitter-receiver combinations so that the location of the device to be positioned can be determined. When simplified, the method is the following kind. A transmitter transmits a given, known data sequence, for example, a so-called PRN, i.e. Pseudo Random Noise code. A receiver generates the same code sequence and synchronises its timing so that the received and generated codes are in the same phase. Now, if the timing of the code sequence of the transmitter is known and the clocks of the transmitter and the receiver have been synchronised with each other, the distance travelled by the signal can be calculated from the length of the synchronising delay of the generated code sequence. It is also possible to use in the method two or more transmitters, the locations of which are known and the clocks of which have been synchronised with each other. In this case, the clock of the receiver does not have to be synchronised with the clocks of the transmitters, but the range difference of the transmitters from the receiver can be calculated from the synchronising delay difference of different code sequences, whereupon a location co-ordinate of the receiver is also obtained when the locations of the transmitters are known. This positioning method is used, for example, in the well-known GPS (Global Positioning System). The patent US3789409 presents a positioning system based on a propagation delay. A problem with methods based on a propagation delay is that in positioning a receiver the transmitters must be extremely accurately synchronised with each other so that the code sequences of the different transmitters can be transmitted in known phases. Correspondingly, when positioning a transmitter the receivers must also be accurately synchronised with each other or with respect to the transmitter so that the reference sequences of the different receivers can be generated in the same phase for determining the synchronising delay. Errors in the absolute timing accuracy of transmitters and receivers also cause errors in positioning. Typically, the system clocks are kept synchronised by using in them extremely accurate atom clocks.

In methods based on the time difference of a signal, the signals are transmitted at known moments of time with a plurality of transmitters and the difference between the receiving times of the signals is measured with a receiver. In a case, where the signals are transmitted simultaneously from two transmitters, the range difference of the transmitters with respect to the receiver can be directly calculated from the difference of the transmitting times. When the locations of the transmitters are known, it is now possible to see from the range difference on which hyperbola the receiver is located with respect to the transmitters. In principle, the method could also be applied to the positioning of a transmitter, in which case two receivers would be used the locations of which are known and the clocks of which would be synchronised with each other. In this case, the absolute moment of time of the receiving of a signal would be measured with both receivers, whereupon the range difference of the receivers with respect to the transmitter would be obtained from their difference. A disadvantage of a method, based on a time difference, is that in the positioning of a receiver, the transmitters must be synchronised with each other because the transmitting delay of signals must be known. In the positioning of a transmitter, the receivers must be synchronised with each other so that the difference of the receiving times of signals could be calculated. The patent H101445 describes a positioning method based on a time difference.

Publication WO 97/11383 describes a method of determining the location of an unknown source transmitting an unknown signal to satellite relays comprising receiving the signal from the relays at respective receivers. The receivers receive reference signals via respective relays from a common source. The unknown signal and reference signal received by each receiver are processed coherently to preserve their timing and phase information relative to one another independently of signals received elsewhere. The signals are frequency downconverted and digitised, and transferred to a common processing computer. The computer performs cross ambiguity function processing of the reference signals to determine their relative Differential Time Offset (DTO) and Differential Frequency Offset (DFO). It performs the like for the received unknown signals to determine relative DTO and DFO, relative time and frequency shifts being introduced between the unknown signals by incorporation of the reference signal DTO and DFO in order to enable the unknown signal DFO to be determined relative to the reference signal DFO. The reference signals are also employed to counteract phase noise and frequency drift effects in the unknown signals. From the unknown signal DTO and DFO the position of the unknown source is calculated.

In methods based on a bearing, the location of a transmitter is determined by measuring at a plurality of known points the propagation direction of a signal. A disadvantage of the method is inaccuracy and the changes caused by reflections in the propagation direction of the signal.

The US patents US5327145 and US5008679 describe positioning methods partly based on the measurement of a receiving delay. In the method described by the patent US5327145, the locations of two transmitters are determined by measuring with one receiver the difference of the moments of receiving the signals coming from the transmitter, i. e. the receiving delay, as well as the angles of incidence of these signals. The method is based on the fact that a signal of one transmitter travels to a receiver along two routes. A first signal is obtained directly from the transmitter, while a second signal travels around a transceiver or a reflector that operates as a link. On the basis of the measured receiving delays and the angles of incidence of the signals, the distance of the receiver to both transmitters can be determined, when the delay caused by the link in the signal path is assumed to be known. A disadvantage of the method is that it does not allow for a variation in the transmitting delay and so the transmitters are interdependent and the moments of transmitting signals must be determined accurately. The method assumes that the moment of transmitting the latter signal and thus also the transmitting delay of the signals only depends on the distance between the transmitters, as well as on the link-transmitter's internal delay of standard length. In this case, even small changes in the internal delay of the link-transmitter directly affect the positioning accuracy. One disadvantage is also that the method requires the measurement of the bearing of transmissions.

In the method described by the patent US5008679, the determination of the location of a transmitter to be positioned takes place by taking a signal along different routes through known links to receivers and by measuring the receiving delay between the signals that travelled along different routes. From the receiving delay, it is possible to determine the difference of the distances travelled by the signals and because the locations of the links and the receivers are known, the location of the transmitter to be positioned can be calculated. A disadvantage of the method is that it does not allow for a variation in the transmitting delay and so the transmitters are interdependent and the moments of transmitting signals from link stations must be determined accurately. The method assumes that the moment of transmitting a link signal and thus also the transmitting delay of signals only depends on the distance between the transmitter and the link, as well as on link transmitters' internal delays of standard length. Even slight changes in the internal delays of link transmitters directly affect the positioning accuracy.

The purpose of the invention is to create a method with which the location of a transmitter can be determined without the transmitters or receivers being interdependent with respect to timing or the measurement performance. In other words, the purpose of the invention is to create a method, wherein receivers passively and independently monitor signals coming from transmitters that are independent of each other, from which signals the location of an unknown transmitter can be determined on the basis of receiving delays measured by the receivers.

In order to achieve the objectives presented above and those to be discussed later, a method according to the invention is mainly characterised in that, in the method, transmitters and receivers are substantially independent of each other; that, in the method, at least two receivers are used to measure the receiving delays between said timing signals originating from the same transmssion that the measurement of the receiving delays is carried out with all receivers substantially at the same time; that on the basis of the receiving delays one or more of the location co-ordinates of the transmitter to be positioned are calculated.

The object of the invention is also a system for positioning a transmitter, which system is characterised in that transmitters and receivers are substantially independent of each other; that the system has at least two receivers arranged to measure the receiving delays between said timing signals originating from the same transmssion, that all the receivers measure the receiving delays substantially at the same time; that a calculating unit calculates, on the basis of the receiving delays, one or more of the location co-ordinates of the transmitter to be positioned.

In the method according to the invention, positioning takes place by measuring simultaneously with a plurality of receivers the receiving delay of timing signals coming from two transmitters. When the locations of the receivers and one transmitter are known, the place of the transmitter to be positioned can be calculated on the basis of the receiving delays without knowing the absolute moments of transmitting or receiving the timing signals. Because the absolute moments of time in question are of no significance to the method, it is possible to use in the method transmitters and receivers that are independent of each other and thus, they do not have to be temporally synchronised with each other either. The receivers do not have to determine the moment of receiving the timing signals with respect to the other receivers and so they can be independent units without temporal synchronisation or common fixing of the time. The transmitters do not have to time the transmission for a given absolute moment of time or with respect to the other transmitter and so they too can be independent units without temporal synchronisation or common fixing of the time. The propagation delay of a signal does not have to be measured and so the measurement can be based, instead of the determination of the phase shift of a code sequence, on the measurement of the time between the receiving of individual pulses. In this case, it is possible to achieve, in the measurement, a higher timing resolution and a signal's multipath propagation does not cause problems because the signal measured does not have to be continuous. The measurement takes place passively, whereupon positioning does not load the transmitter to be positioned. Likewise, the method does not place any restrictions on the transmitter to be positioned other than that it is possible to determine from its signal unambiguously some timing signal on which the measurement of all the receivers can be based.

In the following, the invention will be explained in detail by referring to the enclosed drawings, in which

Figure 1 is a diagram showing the measurement arrangement of a method according to the invention; and

Figure 2 is a diagram showing the transmitting delay between timing signals; and

Figure 3 is a diagram showing the receiving delay between timing signals, measured by receivers; and

Figure 4 is a block diagram showing one positioning system according to the invention.

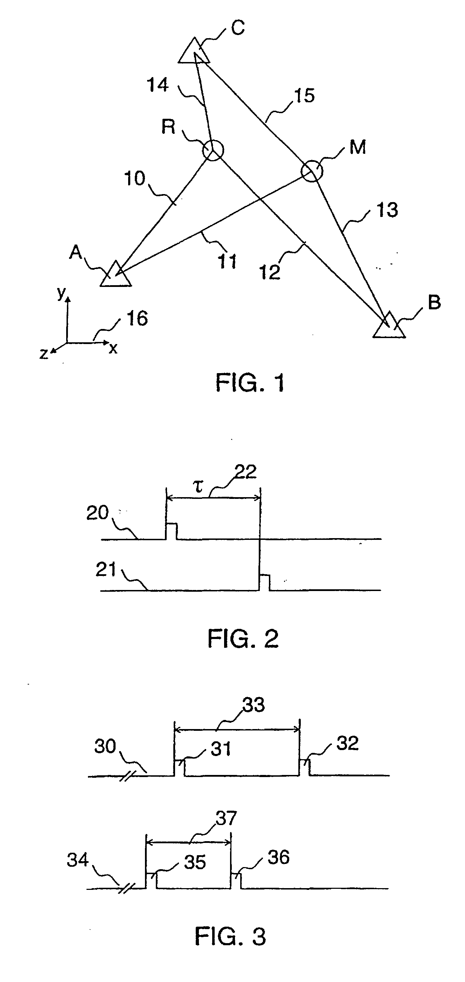

By referring to Figures 1, 2, and 3, position fixing takes place in a simplified manner as follows:

In a method according to the invention, a transmitter M to be positioned forms a geometric dependency with each transmitter R and receiver A, B, C, the locations of which are known. The location of the transmitter to be positioned is determined with respect to the transmitter, the location of which is known, and to the receivers, the locations of which are known, by measuring with a plurality of receivers the receiving delay between the timing signals of different transmitters. By measuring with one receiver A the receiving delay between the timing signals transmitted by these transmitters, M and R, an equation can be formed which has two unknown variables: the transmitters' range difference with respect to the receiver in question 10-11 and an unknown delay 22 between the moments of transmitting the timing signals. When the receiving delay between the same timing signals is measured substantially at the same time, a second equation is also obtained with the second receiver B, the location of which is known, which also has two unknown variables, a range difference 12-13 and a transmitting delay 22. Since the receiving delay measurement of both receivers is based on the same timing signals, the transmitting delay 22 is common in both measurements.

Because the locations of the receivers and that of the transmitters other than the transmitter to be positioned are known with respect to a system of co-ordinates 16, the range differences of the transmitters with respect to each receiver can be expressed by using the location co-ordinates x, y and z of the transmitter to be positioned. In this case, both equations have four common unknowns, i.e. the unknown delay 22 between the moments of transmitting the timing signals, as well as the location co-ordinates of the transmitter M to be positioned.

Thus, with the help of one transmitter R, the location of which is known, and two receivers, A and B, the locations of which are known, we have now got two equations, which have a total of four unknowns: the transmitting delay 22, as well as the co-ordinates x, y and z of the transmitter M to be positioned. If the system of co-ordinates 16 used can be determined so that two of the location co-ordinates of the transmitter to be positioned are known, it is now possible to solve with the arrangement of the two receivers and the one known transmitter in question in addition to the transmitting delay also one location co-ordinate.

If the number of receivers, the locations of which are known, is increased by one, it is possible to form from the new receiving delay measurement a third new equation,-which has the same unknowns as the previous equations. Thus, three variables can be solved when one is assumed to be known.

If the number of transmitters, the locations of which are known, is added by one, it is now possible to make two receiving delay measurements with each receiver, one with respect to the first transmitter and the transmitter to be positioned and one with respect to the second transmitter and the transmitter to be positioned. In this case, the number of equations is the number of receivers multiplied by the number of transmitters the locations of which are known. However, in this case, the number of unknown quantities is also increased by one, while the transmitting delay between the second transmitter and the transmitter to be positioned is unknown.

Hence, with the method according to the invention, it is possible to solve two unknown location co-ordinates of the transmitter to be positioned by using either three receivers, the locations of which are known, and one known transmitter or by using two receivers, the locations of which are known, and two known transmitters. From the previous arrangement, we get three equations with which, in addition to the unknown transmitting delay, two location co-ordinates can be solved. From the latter arrangement, we get four equations but now there are also two unknown transmitting delays, one with respect to both known transmitters and the transmitter to be positioned. Thus, in addition to the unknown transmitting delays, two location co-ordinates can be solved also in this case. This commutativeness can be generalised by saying that by using a total of at least four transmitters or receivers, the locations of which are known, the location co-ordinates x and y of the transmitter to be positioned can be determined irrespective of whether the moment of transmitting, the propagation delay of the timing signals of the different transmitters, the length of the transmitting delay between the timing signals or the moment of receiving the timing signals with respect to the other receivers is known.

By increasing the number of transmitters and receivers, the locations of which are known, more location co-ordinates of the transmitter to be positioned can be solved or the positioning accuracy can be improved by forming many different systems of equations for solving the location co-ordinates of the transmitter to be positioned. If the number of transmitters, the locations of which are known, is denoted by L and the number of receivers by V, as well as the number of location co-ordinates to be solved by K, the number of different combinations of the systems of equations S can be expressed as the formula:

$$S = \frac{(L \cdot V)!}{(K + L)! \cdot (L \cdot V - (K + L))!}$$

This shows that the positioning accuracy can be increased substantially by increasing the number of transmitters the locations of which are known. If, for example, there is a desire to solve the co-ordinates x and y of the transmitter to be positioned and a method according to the invention is used for this, which method has four receivers and two transmitters, the locations of which transmitters are known, the co-ordinates x and y can be solved with 70 different systems of equations. This arrangement would reduce the effect of a random measurement error compared to a corresponding arrangement, wherein one transmitter, the location of which is known, and three receivers are used.

In the following, the method according to the invention will be presented with the help of an example. The method uses two or more receivers and one or more transmitters, the locations of which are known. In this example, there are three receivers and one transmitter, the location of which is known. In the example, the location co-ordinates x and y of the transmitter to be positioned, as well as the transmitting delay between the timing signals of the transmitters are determined on the basis of the measurement results of these receivers. In the example, the location co-ordinate z and the order of transmitting the timing signals are assumed to be known or when the order of transmitting the timing signals is unknown, that the receivers are able to distinguish between the timing signals of the transmitters at any given time. In the example, it is assumed for the sake of clarity that the co-ordinate z is known but, according to the same principle, the location co-ordinates x, y and z of the transmitter to be positioned could be determined with four receivers and one known transmitter or even with three receivers and two known transmitters provided that the order of transmitting the timing signals is known or it is possible to distinguish between the timing signals of the transmitters. If there were less unknown quantities than the number of receivers and transmitters, the locations of which are known, would provide for, the positioning accuracy could be increased by solving the unknown quantities by forming more systems of equations from the measurement results of the transmitter-receiver combinations as was described above, and by combining the obtained results.

According to Figure 1, the receivers A, B, and C are located at known points with respect to the system of co-ordinates 16, the axes x, y and z of which have been determined in this example so that the transmitters and the receivers are located on the plane x-y indicated by it. R is a transmitter, the location of which is known, and M is the transmitter to be positioned.

Let the following symbols be determined for illustrating the method:

Let the location co-ordinates x of the receivers A, B and C, as well as of the transmitters R and M be $X_A$, $X_B$, $X_C$, $X_R$ and $X_M$ respectively and let the co-ordinates y be $Y_A$, $Y_B$, $Y_C$, $Y_R$ and $Y_M$ respectively. Let the value of the location co-ordinates be expressed as a distance from the origin of the system of co-ordinates 16 used.

Let distances 10, 12 and 14 of the transmitter R from the receivers A, B and C be $L_{R-A}$, $L_{R-B}$, $L_{R-C}$ respectively.

Let distances 11, 13 and 15 of the transmitter M from the receivers A, B and C be $L_{M-A}$, $L_{M-B}$, $L_{M-C}$ respectively.

The distance 11 can now be expressed with the help the co-ordinates x and y in the form

$$L_{M-A} = \sqrt{(X_A - X_M)^2 + (Y_A - Y_M)^2},$$

and the distances 13 and 15 respectively in the form

$$L_{M-B} = \sqrt{(X_B - X_M)^2 + (Y_B - Y_M)^2}$$

and

$$L_{M\text{-}C} = \sqrt{(X_C - X_M)^2 + (Y_C - Y_M)^2}$$

In the method according to the invention, the transmitters R and M both transmit a timing signal independent of each other with some random delay, which is illustrated in Figure 2. In the method, neither the moments of transmitting the timing signals nor the transmitting delay need to be known or pre-determined and so the transmitters need to be synchronised neither with each other nor with respect to the receivers. Of course, the transmitters may have some kind of dependency, such as, e.g. that they communicate with each other and thus, send signals in turn. However, this type of timing dependency is so rough that it is of no significance to positioning. Hence, the transmitters are substantially independent of each other. However, a transmitter must not send the same timing signals more frequently than at a sequence determined from the relationship between the maximum possible receiver distance and the propagation rate of a signal. In this case, one can be certain that, in all receivers, the measurement of the receiving delay is based on the same timing signals.

Timing signals 20 and 21 can be either pulse-shaped, step-like or similar. It should be noted, that the timing signals used in determining time difference need not necessarily be physical signals themselves, but can be mathematically derived reference points from a larger set of physical signal transitions. A simple example of this could be a reference point calculated from the average timings of all baseband signal phase transitions during one packet transmission. Using a mathematically derived timing signal the whole received information can be better utilised and the accuracy of the positioning can thus be increased. However, it is essential that all receivers are able to unambiguously determine in both timing signals the point on which the measurement of the receiving delay should be based. Let us assume that the order of transmitting is known, whereupon it can be agreed that the signal 20 represents the timing signal of the transmitter R and the signal 21 represents the timing signal of the transmitter M. The length 22 of the transmitting delay of the timing signals is unknown. Let the unknown transmitting delay 22 be denoted by the symbol $\tau$.

Now, let us assume to be known that R is the first to transmit a timing signal, but just as well M could be the first to transmit a timing signal. This being the case, the sign of one term in the timing equations would change in the manner described below or the signs of the measurement values of the receiving delays should be inverted. If the order of transmitting the signals was unknown and the receivers were unable to distinguish between the timing signals of the different transmitters, the order of transmitting could be solved in the system of equations along with the rest of the variables so long as the number of receivers and transmitters and thus, also the number of available equations would be sufficient.

Each receiver detects the same timing signals 20 and 21. In the method according to the invention, it does not make any difference at which moment of time the timing signals arrive at a given receiver with respect to the other receivers or with respect to the moment of transmitting and so the clocks of the receivers need to be synchronised neither with each other nor with the transmitters, and no common system time is required in the method. Each receiver operates independently passively monitoring the signals coming from the transmitters. Thus, the receivers are substantially independent of each other. However, it is essential that the receiving delay measurement made by each receiver is based on timing signals that originate from the same transmission and that the measurements are made with all the receivers substantially at the same time so that, after the transmission of the timing signals, the measurement values of the receiving delays of the timing signals in question are obtained from each receiver. In other words, not so that in one transmission the delays are measured with the receiver A, in a second transmission the delays are measured with the receiver B, and in a third transmission with a receiver C, but so that in one transmission the delays are measured with all the receivers A, B and C. If more transmitters, the locations of which are known, were used, each receiver would make more measurements and would measure the receiving delay of the timing signal of each transmitter, the locations of which are known, with respect to the timing signal of the transmitter to be positioned. Figure 3 shows the receiving delay of timing signals detected by a receiver. Timing figure 30 represents a situation, where the transmitter that was the first to transmit a timing signal is located closer to the receiver than the transmitter that was the second to transmit a timing signal. In this case, a timing signal 31 of the first transmitter is detected first and, after a receiving delay 33, a timing signal 32 of the second transmitter will be detected. In this case, the length of the receiving delay detected by the receiver is $\tau$, added by the time which is proportional to the range difference of the transmitters with respect to the receiver in question, as well as to the propagation rate of the signal, which hereinafter will be denoted by the symbol $c$.

Timing figure 34 represents a situation, where the transmitter that was the first to transmit a timing signal is located further away from the receiver than the transmitter that was the second to transmit a timing signal. In this case, a length 37 of the receiving delay detected by the receiver is the transmitting delay $\tau$, less the time which is proportional to the range difference of the transmitters with respect to the receiver in question, as well as to the propagation rate of the signal. This being the case, the order of detecting the timing signals also depends on the length of the transmitting delay in proportion to the range difference of the transmitters with respect to the receiver. In a normal case, where the transmitting delay $\tau$ is longer than the time it takes for a signal to travel the distance of the length of the difference between the distances of the transmitters and the receiver (e.g. $L_{M-A}$ - $L_{R-A}$), a timing signal 35 detected first is also the one that was transmitted first and a timing signal 36 detected second is the one that was transmitted second. In a special case, where the transmitting delay $\tau$ is shorter than the time it takes for a signal to travel the distance of the length of the difference between the transmitters and the receiver (e.g. $L_{M-A}$ - $L_{R-A}$), the signal that was transmitted later will be detected first and only after this, the timing signal that was transmitter earlier. In this case, according to the rule of signs, the receiving delay becomes negative. This can be solved in the receiver, for example, so that the receiver identifies which transmitter's timing signal is in question in the signals 35 and 36, and determines the sign of the receiving delay according to the agreed practice. If, for some reason, the timing signals cannot be distinguished or there is a desire not to distinguish them from each other, it can also be agreed that the transmitting delay $\tau$ is long enough in which case the special situation in question will not occur. This can be implemented within the method, for example, so that the transmitter R, the location of which is known, also contains a receiver and detects the timing signal of the transmitter to be positioned. In this case, the transmitter R, the location of which is known, can wait for at least a given time after the transmission of the timing signal of M before transmitting its own timing signal.

Irrespective of which transmitter is located closer to a receiver, the receiving delays measured by receivers comply with the following dependency: Let the receiving delays measured by the receivers A, B and C be $T_A$, $T_B$ and $T_C$ respectively. In this case when, due to the rule of signs, it is agreed that the transmitter R is the first to transmit a timing signal, we get:

$$T_A = \tau + \frac{L_{M-A} - L_{R-A}}{c}$$

$$T_B = \tau + \frac{L_{M-B} - L_{R-B}}{c}$$

$$T_C = \tau + \frac{L_{M-C} - L_{R-C}}{c},$$

where $c$ is the propagation rate of a signal.

In the example, it is assumed that the signals of both transmitters have the same propagation rate but, as for the method according to the invention, this is of no significance. Just as well the signals could have different propagation rates, e.g. the signal of M could have the rate c and the signal of R, the rate $\nu$, whereupon in this case, e.g. $T_C$ would be expressed in the form

$$T_C = \tau + \frac{L_{M-C}}{c} - \frac{L_{R-C}}{\nu}$$

If it had been agreed as the rule of signs that the transmitter M transmits a timing signal first, the equations would be respectively

$$T_A = \tau - \frac{L_{M-A} - L_{R-A}}{c}$$

$$T_B = \tau - \frac{L_{M-B} - L_{R-B}}{c}$$

$$T_C = \tau - \frac{L_{M-C} - L_{R-C}}{c},$$

which, in fact, is the same as if equations according to the transmission order R-M are used and the sign of the measured receiving delays is inverted.

If there were more known transmitters than one, according to the principle described above, equations would be formed with respect to the other pairs of transmitter and their receiving delays.

In this example, the order of transmitting the timing signals was agreed above to be R-M, whereupon the system of equations to be solved is:

$$
\left.\begin{aligned}
L_{M-A} &= c \cdot T_A - c \cdot \tau + L_{R-A} \\
L_{M-R} &= c \cdot T_B - c \cdot \tau + L_{R-B} \\
\tau &= T_C - \frac{L_{M-C} - L_{R-C}}{c}
\end{aligned}\right\}
$$

This can be expressed in three unknown variables using co-ordinates $X_M$ and $Y_M$ as follows:

$$
\left.\begin{aligned}
\sqrt{(X_A - X_M)^2 + (Y_A - Y_M)^2} &= c \cdot T_A - c \cdot \tau + L_{R-A} \\
\sqrt{(X_B - X_M)^2 + (Y_B - Y_M)^2} &= c \cdot T_B - c \cdot \tau + L_{R-B} \\
\tau &= T_C - \frac{\sqrt{X_C - X_M)^2 + (Y_C - Y_M)^2} - L_{R-C}}{c}
\end{aligned}\right\}
$$

which is reduced to the system of equations

$$
\left.\begin{aligned}
X_A^2 - 2 \cdot X_A - X_M + X_M^2 + (Y_A - Y_M)^2 - (c \cdot T_A - c \cdot \tau + L_{R-A})^2 &= 0 \\
Y_B^2 - 2 \cdot Y_B \cdot Y_M + Y_M^2 + (X_B - X_M)^2 - (c \cdot T_B - c \cdot \tau + L_{R-B})^2 &= 0 \\
c \cdot \tau - c \cdot T_C - L_{R-C} + \sqrt{(X_C - X_M)^2 + (Y_C - Y_M)^2} &= 0
\end{aligned}\right\}
$$

Because the receiving delays $T_A$, $T_B$ and $T_C$ have been measured and are known, this non-linear system of equations can now be solved with respect to the unknown variables $X_M$ and $Y_M$ and $\tau$, whereupon the location of the transmitter to be positioned has thus been determined.

In the following, we have described the steps of performance of one exemplary case for applying the method according to the invention:

1. Determining the system of co-ordinates 16 used.
2. Determining the location co-ordinates of the receivers A, B, C and the known transmitter R in the system of co-ordinates 16.
3. Determining the timing signals 20 and 21 used, on which the measurement of the receiving delays 33 or 37 is based, and agreeing on the assumed transmission order for determining the sign of the receiving delay.
4. Setting the transmitter R to transmit the agreed timing signals at given intervals or, if R is a transceiver, to transmit a timing signal after the timing signal transmitted by M.
5. Following with each receiver the transmissions of the transmitters. When a receiver detects the timing signal of the transmitter R or M, it starts the measurement of time.
6. When a receiver detects the timing signal of the other transmitter, it stops the measurement of time. The sign of the measured receiving delay is determined according to the order of receiving the timing signals in accordance with the agreed rule of signs.

7. Transferring the values of the measured receiving delays for carrying out the calculation from the receivers to the calculating unit.

8. Forming a system of equations or systems of equations in the manner presented above with the help of the measured receiving delays, the known co-ordinates and the known propagation rates of the signals.

9. Solving the formed systems of equations with respect to the unknown location co-ordinates and the transmitting delay or delays.

The positioning method according to the invention can be applied to the positioning of various types of transmitters. In particular, the method is preferably suitable for use in the positioning of radio transmitters of digital data transmission systems, such as Bluetooth™ systems. In a Bluetooth™ system, radio sets form with each other ad-hoc networks, wherein the network's master unit and slave units transmit in turn data packets on a common data transmission channel. In a system like this, the positioning of a transmitter can preferably be implemented by passively monitoring with each receiver the data traffic used on the data transmission channel in question. In this case, the transmitter of each data packet can be identified from the header part and transmission sequence of a packet. A jointly agreed bit included in a packet's header part, such as for example the first signal 0-1 transition detected after the address field can also be used as the timing signal for the receiving delay measurement. Although the moments of transmitting data packets of Bluetooth™ devices do have a certain temporal dependency with each other, the variation in the transmitting delay is however so great that it cannot be utilised in conventional positioning methods based on the measurement of a time difference. In the method according to the invention, the transmitting delay of timing signals need not, however, be known and so the location of a transmitter can be determined accurately from a pulse-like timing signal regardless of the absolute moments of transmitting the timing signals.

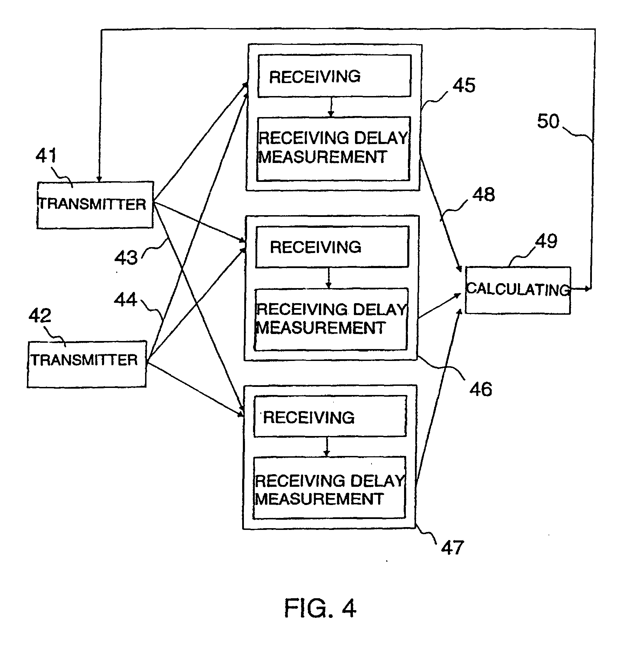

Figure 4 shows the operating principle of the positioning system of a Bluetooth™ transmitter according to the invention. The system comprises transmitters 41 and 42, receivers 45, 46, 47, the locations of which are known, as well as a calculating unit 49. The receivers, which the system has at least two, include means for receiving timing signals and for measuring the receiving delay. The calculating unit 49 can be either a separate unit or integrated in connection with some receiver. The transmitter 41 is the Bluetooth™ transmitter to be positioned and 42 is the transmitter the location of which is known. The transmitter 42 can operate as an independent unit, which transmits at regular intervals timing signals on its own data transmission channel or it can form with the transmitter 41 a common data transmission channel, a piconetwork, whereupon they transmit data packets 43 and 44 to each other. As for the operation of the positioning system, however, the transmitters 41 and 42 are independent of each other, because the relative timing of the moments of transmitting the signals is in any case so inaccurate that it cannot be utilised in position fixing. The receivers 45, 46 and 47, which are independent of each other, monitor passively the data traffic of the data transmission channel or channels and make receiving delay measurements in the timing signals, which are included in the data packets 43 and 44. This can take place, for example, so that the receivers monitor the content of the header of the transmitted data packets and when detecting a transmission from the transmitter 41 or 42, they start or stop the measurement of time, for example, by the first 0-1 signal transition after the address field. The receivers do not have to be synchronised with each other, because the absolute moments of receiving the timing signals are of no significance to the operation of the positioning system. The receiving delays' measurement results 48 are transferred from the receivers to the calculating unit which, on the basis of them, determines the location co-ordinates of the transmitter 41 to be positioned. If so desired, location co-ordinates 50 can be transferred from the calculating unit over the radio path further to the Bluetooth™ transmitter to be positioned.

## Claims

1. A method for positioning a transmitter (M), wherein the receiving delay of the timing signals (20) of one or more transmitters (R), the locations of which are known, is measured with receivers (A, B, C), the locations of which are known, with respect to the timing signal (21) transmitted by a transmitter (M) to be positioned and by making use of these measurements numerically the place of the transmitter (M), the location of which is unknown, is determined, **characterised in that**, in the method, the transmitters and the receivers are substantially independent of each other, that, in the method, at least two receivers (A, B) are used to measure the receiving delays between said timing signals (20, 21) originating from the same transmission, that, the measurement of the receiving delays is made with all the receivers (A, B) substantially at the same time, that, on the basis of the receiving delays, one or more location co-ordinates of the transmitter (M) to be positioned is calculated.

2. A method according to claim 1, **characterised in that**, on the basis of the receiving delays, the transmitting delays between the timing signals of the transmitter to be positioned and a transmitter or transmitters, the locations of which are known, is determined.

3. A method according to claim 2, **characterised in that** the method comprises receiving the timing signals with two or more receivers from both the transmitter to be positioned and the transmitter the location of which is known, measuring, with each receiver, the receiving delay between these timing signals, calculating, on the basis of the measured receiving delays, the unknown location co-ordinates of the transmitter to be positioned, as well as the transmitting delay between the timing signals of the transmitters.

4. A method according any one of the preceding claims, **characterised in that** as the timing signal there is a pulse, a step-like change or similar, or a mathematically derived reference point from a set of physical signal transitions, that the determination of the location takes place passively with respect to the transmitter to be positioned, that by using a total of at least four transmitters or receivers, the locations of which are known, the location co-ordinates x and y of the transmitter to be positioned can be determined irrespective of whether the moment of transmitting, the propagation delay of the timing signals of the different transmitters, the length of the transmitting delay between the timing signals or the moment of receiving the timing signals with respect to the other receivers is known.

5. A method according to any one of the preceding claims, **characterised in that**, in the method, more transmitters and receivers, the locations of which are known, are used than would be necessary for positioning, whereupon the positioning accuracy can be increased by solving the unknown location co-ordinates with the help of more systems of equations.

6. A system for positioning a transmitter (M), wherein with receivers (A, B, C), the locations of which are known, the receiving delay of timing signals (20) transmitted by one or more transmitters (R) the locations of which are known, is measured with respect to the timing signal (21) transmitted by the transmitter (M) to be positioned and by making use of these measurements numerically the place of the transmitter (M), the location of which is unknown, is determined, **characterised in that** the transmitters and the receivers are substantially independent of each other, that the system has at least two receivers (A, B) arranged to measure the receiving delays between said timing signals (20, 21) originating from the same transmission, that all the receivers (A, B) measure the receiving delays substantially at the same time, that a calculating unit calculates, on the basis of the receiving delays, one or more of the location co-ordinates of the transmitter to be positioned.

7. A system according to claim 6, **characterised in that** the calculating unit calculates, on the basis of the receiving delays, the transmitting delays between the timing signals of the transmitter to be positioned and the transmitter or transmitters, the locations of which are known.

8. A system according to claim 7, **characterised in that** each receiver receives the timing signal transmitted by each transmitter, each receiver measures the receiving delay between the timing signals, each receiver transfers the value of the receiving delay to the calculating. unit, the calculating unit calculates, on the basis of known parameters and the measured receiving delays, the location co-ordinates of the transmitter to be positioned.

9. A system according to claim 8, **characterised in that** the transmitter to be positioned is a radio transmitter.

10. A system according to claim 9, **characterised in that** the transmitter, the location of which is known, and the transmitter to be positioned form a piconetwork, that the positioning takes place by passively monitoring with the receivers the data traffic of the piconetwork in question.

**Patentansprüche**

1. Verfahren zum Positionieren eines Senders (M), bei dem die Empfangsverzögerung der Taktsignale (20) eines oder mehrerer Sender (R), deren Orte bekannt sind, mittels Empfängern (A, B, C), deren Orte bekannt sind, in bezug auf das von einem zu positionierenden Sender (M) gesendete Taktsignal (21) gemessen wird und unter numerischer Verwendung dieser Messungen der Platz des Senders (M), dessen Ort unbekannt ist, bestimmt wird, **dadurch gekennzeichnet, daß** in dem Verfahren die Sender und die Empfänger im wesentlichen voneinander unabhängig sind, daß in dem Verfahren wenigstens zwei Empfänger (A, B) verwendet werden, um die Empfangsverzögerungen zwischen den von derselben Sendung ausgehenden Taktsignalen (20, 21) zu messen, daß die Messung der Empfangsverzögerungen mit allen Empfängern (A, B) im wesentlichen zur selben Zeit ausgeführt wird und daß auf der Grundlage der Empfangsverzögerungen eine oder mehrere Ortskoordinaten des Senders (M), der positioniert werden soll, berechnet werden.

**2.** Verfahren nach Anspruch 1, **dadurch gekennzeichnet, daß** auf der Grundlage der Empfangsverzögerungen die Sendeverzögerungen zwischen den Taktsignalen des zu positionierenden Senders und eines oder mehrerer Sender, deren Orte bekannt sind, bestimmt wird.

**3.** Verfahren nach Anspruch 2, **dadurch gekennzeichnet, daß** das Verfahren das Empfangen der Taktsignale mit zwei oder mehr Empfängern sowohl von dem zu positionierenden Sender als auch von dem Sender, dessen Ort bekannt ist, das Messen der Empfangsverzögerung zwischen diesen Taktsignalen mit jedem Empfänger und das Berechnen der unbekannten Ortskoordinaten des zu positionierenden Senders sowie der Sendeverzögerung zwischen den Taktsignalen der Sender auf der Grundlage der gemessenen Empfangsverzögerungen umfaßt.

**4.** Verfahren nach einem der vorhergehenden Ansprüche, **dadurch gekennzeichnet, daß** als das Taktsignal ein Impuls, eine stufenähnliche Änderung oder dergleichen oder ein mathematisch abgeleiteter Referenzpunkt aus einer Menge physikalischer Signalübergänge verwendet wird, daß die Bestimmung des Ortes in bezug auf den zu positionierenden Sender passiv erfolgt und daß unter Verwendung von insgesamt wenigstens vier Sendern oder Empfängern, deren Orte bekannt sind, die Ortskoordinaten x und y des zu positionierenden Senders unabhängig davon bestimmt werden können, ob der Zeitpunkt des Sendens, die Ausbreitungsverzögerung der Taktsignale der verschiedenen Sender, die Länge der Senderverzögerung zwischen den Taktsignalen oder der Zeitpunkt des Empfangs der Taktsignale in bezug auf die anderen Empfänger bekannt ist.

**5.** Verfahren nach einem der vorhergehenden Ansprüche, **dadurch gekennzeichnet, daß** in dem Verfahren mehr Sender und Empfänger, deren Orte bekannt sind, verwendet werden, als für die Positionierung notwendig wären, wodurch die Positionierungsgenauigkeit erhöht werden kann, indem die unbekannten Ortskoordinaten mit Hilfe mehrerer Gleichungssysteme gelöst werden.

**6.** System zum Positionieren eines Senders (M), bei dem mittels Empfängern (A, B, C), deren Orte bekannt sind, die Empfangsverzögerung von Taktsignalen (20), die von einem oder von mehreren Sendern (R), deren Orte bekannt sind, gesendet werden, in bezug auf das Taktsignal (21), das von dem zu positionierenden Sender (M) gesendet wird, gemessen wird und unter numerischer Verwendung dieser Messungen der Platz des Senders (M), dessen Ort unbekannt ist, bestimmt wird, **dadurch gekennzeichnet, daß** die Sender und die Empfänger im wesentlichen voneinander unabhängig sind, daß das System wenigstens zwei Empfänger (A, B) besitzt, die so angeordnet sind, daß sie die Empfangsverzögerungen zwischen den Taktsignalen (20, 21), die von derselben Sendung ausgehen, messen, daß alle Empfänger (A, B) die Empfangsverzögerungen im wesentlichen zur gleichen Zeit messen und daß eine Berechnungseinheit auf der Grundlage der Empfangsverzögerungen eine oder mehrere Ortskoordinaten des zu positionierenden Senders berechnet.

**7.** System nach Anspruch 6, **dadurch gekennzeichnet, daß** die Berechnungseinheit auf der Grundlage der Empfangsverzögerungen die Sendeverzögerungen zwischen den Taktsignalen des zu positionierenden Senders und dem oder den Sendern, deren Orte bekannt sind, berechnet.

**8.** System nach Anspruch 7, **dadurch gekennzeichnet, daß** jeder Empfänger das von jedem Sender gesendete Taktsignal empfängt, jeder Empfänger die Empfangsverzögerung zwischen den Taktsignalen mißt, jeder Empfänger den Wert der Empfangsverzögerung zu der Berechnungseinheit überträgt und die Berechnungseinheit auf der Grundlage bekannter Parameter und der gemessenen Empfangsverzögerungen die Ortskoordinaten des zu positionierenden Senders berechnet.

**9.** System nach Anspruch 8, **dadurch gekennzeichnet, daß** der zu positionierende Sender ein Funksender ist.

**10.** System nach Anspruch 9, **dadurch gekennzeichnet, daß** der Sender, dessen Ort bekannt ist, und der zu positionierende Sender ein Piconetz bilden und daß die Positionierung durch passives Überwachen des Datenverkehrs des betreffenden Piconetzes mit den Empfängern erfolgt.


**Revendications**

**1.** Procédé pour positionner un émetteur (M), dans lequel le délai de réception des signaux de cadencement (20) d'un ou plusieurs émetteurs (R), dont les emplacements sont connus, est mesuré avec des récepteurs (A, B, C), dont les emplacements sont connus, par rapport au signal de cadencement (21) transmis par un émetteur (M) qui doit être positionné et en faisant usage de ces mesures de manière numérique, l'emplacement de l'émetteur (M), dont l'emplacement est inconnu, est déterminé, **caractérisé en ce que**, dans le procédé, les émetteurs et les récepteurs sont sensiblement mutuellement indépendants, **en ce que**, dans le procédé, au moins deux récepteurs (A, B) sont utilisés pour mesurer les délais de réception entre lesdits signaux de cadencement (20, 21) provenant de la même transmission, **en ce que** la mesure des délais de réception est effectuée avec la totalité des récepteurs (A, B) sensiblement au même instant, **en ce que**, sur la base des délais de réception, une ou plusieurs coordonnées d'emplacement de l'émetteur (M) qui doit être positionné sont calculées.

2. Procédé selon la revendication 1, **caractérisé en ce que**, sur la base des délais de réception, les délais d'émission entre les signaux de cadencement de l'émetteur qui doit être positionné et un émetteur ou des émetteurs, dont les emplacements sont connus, sont déterminés.

3. Procédé selon la revendication 2, **caractérisé en ce que** le procédé comprend la réception des signaux de cadencement avec deux ou plusieurs récepteurs depuis à la fois l'émetteur qui doit être positionné et l'émetteur dont l'emplacement est connu, la mesure, avec chaque récepteur, du délai de réception entre ces signaux de cadencement, le calcul, sur la base des délais de réception mesurés, des coordonnées d'emplacement non connues de l'émetteur qui doit être positionné, de même que du délai de transmission entre les signaux de cadencement des émetteurs.

4. Procédé selon l'une quelconque des revendications précédentes, **caractérisé en ce que** comme signal de cadencement on a une impulsion, un changement de type pas ou similaire, ou un point de référence obtenu mathématiquement depuis un ensemble de transitions de signaux physiques, **en ce que** la détermination de l'emplacement a lieu passivement par rapport à l'émetteur qui doit être positionné, **en ce qu'**en utilisant un total d'au moins quatre émetteurs ou récepteurs, dont les emplacements sont connus, les coordonnées d'emplacement x et y de l'émetteur qui doit être positionné peuvent être déterminées sans tenir compte du fait que l'un quelconque du moment de transmission, du délai de propagation des signaux de cadencement des émetteurs différents, de la durée du délai de transmission entre les signaux de cadencement ni du moment de la réception des signaux de cadencement par rapport aux autres récepteurs est connu.

5. Procédé selon l'une quelconque des revendications précédentes, **caractérisé en ce que**, dans le procédé, plus d'émetteurs et de récepteurs, dont les emplacements sont connus, sont utilisés qu'ils devraient être nécessaires pour le positionnement, sur quoi la précision du positionnement peut être accrue en résolvant les coordonnées d'emplacement non connues à l'aide de plus de systèmes d'équations.

6. Système pour positionner un émetteur (M), dans lequel, avec des récepteurs (A, B, C) dont les emplacements sont connus, le délai de réception des signaux de cadencement (20) transmis par un ou plusieurs émetteurs (R), dont les emplacements sont connus, est mesuré par rapport au signal de cadencement (21) transmis par l'émetteur (M) qui doit être positionné et en faisant usage de ces mesures numériquement l'emplacement de l'émetteur (M), dont l'emplacement est inconnu, est déterminé, **caractérisé en ce que** les émetteurs et les récepteurs sont sensiblement indépendants les uns des autres, **en ce que** le système comporte au moins deux récepteurs (A, B) conçus pour mesurer les délais de réception entre lesdits signaux de cadencement (20, 21) provenant de la même transmission, **en ce que** la totalité des récepteurs (A, B) mesure les délais de réception sensiblement au même instant, **en ce qu'**une unité de calcul calcule, sur la base des délais dé réception, une ou plusieurs des coordonnées d'emplacement de l'émetteur qui doit être positionné.

7. Système selon la revendication 6, **caractérisé en ce que** l'unité de calcul calcule, sur la base des délais de réception, les délais de transmission entre les signaux de cadencement de l'émetteur qui doit être positionné et l'émetteur ou les émetteurs dont les emplacements sont connus.

8. Système selon la revendication 7, **caractérisé en ce que** chaque récepteur reçoit le signal de cadencement transmis par chaque émetteur, chaque récepteur mesure le délai de réception entre les signaux de cadencement, chaque récepteur transfère la valeur du délai de réception à l'unité de calcul, l'unité de calcul calcule, sur la base de paramètres connus et des délais de réception mesurés, les coordonnées d'emplacement de l'émetteur qui doit être positionné.

9. Système selon la revendication 8, **caractérisé en ce que** l'émetteur qui doit être positionné est un émetteur radio.

10. Système selon la revendication 9, **caractérisé en ce que** l'émetteur, dont l'emplacement est connu, et l'émetteur qui doit être positionné forment un picoréseau, **en ce que** le positionnement a lieu en surveillant de manière passive avec les récepteurs le trafic de données du picoréseau en question.

FIG. 1

FIG. 2

FIG. 3

FIG. 4